# EUROPEAN PATENT APPLICATION

(11) **EP 2 338 344 A1**
(43) Date of publication of application: **29.06.2011**
(21) Application number: 10195071.5
(22) Date of filing: 15.12.2010
(51) Int. Cl.: A21C 15/02, A23L 1/00, A23G 9/50, A21D 13/00

(54) **Edible receptacles for frozen confections**

(30) Priority: 22.12.2009 EP 09180347
(71) Applicant: Unilever PLC, A Company Registered In England And Wales under company no. 41424 of Unilever House, London EC4Y 0DY (GB); Unilever N.V., 3013 AL Rotterdam (NL)
(72) Inventor: Bartkowska, Beata, Bedford, Bedfordshire MK44 1LQ (GB); Hall, Richard, Andrew, Bedford, Bedfordshire MK44 1LQ (GB); Sun, Lina, Bedford, Bedfordshire MK44 1LQ (GB)
(74) Representative: Clarke, Christopher John

(57) **Abstract**

An edible receptacle suitable for containing a frozen confection is provided, the receptacle comprising at least 50 wt% of pieces of soft baked material of from 1 to 20 mm in size. A process for preparing the edible receptacle is also provided, comprising: dosing the required amount of pieces of soft baked material having a size of from 1 to 20 mm into a support mould, compacting the pieces to form an agglomerate, and inserting a shaping tool into the agglomerate in the support mould to form the agglomerate into a receptacle of the desired shape. A composite frozen confection product comprising the edible receptacle and a frozen confection is also provided.

## Description

### Technical Field of the Invention

The present invention relates to edible receptacles for frozen confections, such as cones used for ice cream cone products, and methods for producing them.

### Background to the Invention

Ice cream cone products, such as Cornetto™ are popular and well-known. These products typically consist of a wafer cone filled with ice cream. The cones are made from a batter which is composed largely of flour, sugar, fat/oil and water. The batter is baked on a plate. During baking, most of the water in the batter is driven off as steam. Immediately after baking the wafers are flexible which allows them to be shaped, e.g. to form a rolled cone from the flat sheet. Then the cone is inserted into a cone sleeve. To prevent the wafer from becoming soggy by absorbing water from the ice cream, the inside of the cone is usually sprayed with a fat-based coating (such as chocolate) to form a moisture barrier. Finally, the cone is filled with ice cream on top of which sauces or pieces of biscuit, nut or fruit are dispensed to provide an attractive appearance to the product.

However, consumers are continually looking for new eating experiences, and conventional cones may be perceived as somewhat old-fashioned and uninteresting. For example, the cones themselves do not have much flavour. Therefore there have been attempts to make cones from other materials. EP 1 719 413 discloses a cone made from particles of cooked biscuit (i.e. a hard baked material) bound together with a cocoa butter equivalent fat. Whilst this provides a different type of cone, it nonetheless has some drawbacks; in particular the use of a cocoa butter equivalent fat as a binder is undesirable since due to health concerns there is an increasing demand for products which contain reduced amounts of fat and calories.

Thus there remains a need for improved cones which do not suffer from these disadvantages.

### Brief Description of the Invention

We have now found that edible receptacles, such as cones, can be produced from particles of baked material without requiring any binder, provided that the baked material has particular properties. Accordingly, in a first aspect, the present invention provides an edible receptacle suitable for containing a frozen confection which comprises at least 50 wt% of pieces of soft baked material having a size of from 1 to 20 mm. The receptacles solve a number of problems with previously known cones, for example they provide an unusual texture and appearance, they do not lose their eating characteristics on storage, and they do not require a binder or an internal layer of a fat-based coating whilst still being robust and dry-to-touch.

Preferably the receptacle contains less than 10 wt% of binder, most preferably it contains no binder.

Preferably the pieces of soft baked material are from 2 to 10 mm in size.

In one embodiment the receptacle comprises up to 50 wt% of other particulate edible material of from 1 to 20 mm in size. Preferably the other edible particulate material is selected from seeds, nuts, cereals, fruit pieces, chocolate chips and mixtures thereof.

Preferably the receptacle is a cone with a circular cross-section. Alternatively the receptacle has a polygonal cross-section, such as a triangle, square, rectangle or hexagon.

Preferably the receptacle has a wall thickness of from 2 to 5mm.

Preferably the receptacle has a mass of from 5 to 30g, more preferably from 10 to 25g.

The receptacles can produced by means of a simple process. Accordingly, in a second aspect, the present invention provides a process for preparing an edible receptacle according to the first aspect of the invention, the process comprising:
(a) dosing the required amount of pieces of soft baked material having a size of from 1 to 20 mm into a support mould,
(b) compacting the pieces to form an agglomerate, and
(c) inserting a shaping tool into the agglomerate in the support mould to form the agglomerate into a receptacle of the desired shape.

Preferably the receptacle is frozen shortly after step (c). We have found that by forming the receptacle from pieces of soft baked material and then subsequently freezing it that the receptacle retains its shape. More preferably a frozen confection is filled into the receptacle shortly after step (c), which thereby cools and starts to freeze the receptacle.

Preferably the support mould contains packaging material, so that in step (a), the pieces of soft baked material are dosed directly into the packaging material and so that the receptacle is formed inside the packaging material.

In one embodiment, ultrasound is applied to the agglomerate in step (c).

In a third aspect, the present invention provides a composite frozen confection product which comprises an edible receptacle according to the first aspect of the invention and a frozen confection.

In a fourth aspect, the present invention provides a process for manufacturing a composite frozen confection according to the third aspect of the invention, the process comprising dispensing a frozen confection into an edible receptacle according to the first aspect of the invention.

### Detailed Description of the Invention

Unless defined otherwise, all technical and scientific terms used herein have the same meaning as commonly understood by one of ordinary skill in the art (e.g. in frozen food manufacture). Definitions and descriptions of various terms and techniques used in frozen confectionery manufacture are found in "Ice Cream", 6th Edition R.T. Marshall, H.D. Goff and R.W. Hartel, Kluwer Academic / Plenum Publishers, New York 2003.

Frozen confection means a confection made by freezing a pasteurised mix of ingredients such as water, fat, sweetener, protein (normally milk proteins), and optionally other ingredients such as emulsifiers, stabilisers, colours and flavours. Frozen confections may be aerated. Frozen confections include ice cream, water ice, frozen yoghurt and the like. They typically have an overrun of from 50 and 150%, preferably from 80 to 120%. The frozen confection may be ice cream, sherbet, sorbet, water ice or frozen yoghurt.

As used herein, the term "binder" means a substance which is used to stick pieces of baked material together. Binders are typically based on fats or viscous sugar solutions.

As used herein, the term "baked material" means a food product which is produced by baking a mix (dough) comprising flour and water, and optionally other ingredients such as sugars and fats / oils. As used herein, the term "soft baked material" means a baked material which has a water content of from 5 to 20wt%. Soft baked materials typically have an open, aerated structure. Soft baked materials therefore include cake (e.g. sponge cake), cookies, brownies and the like, and also bread, although this is less preferred. Hard baked materials such as biscuit typically have a moisture content of less than 5 wt%, e.g. about 2 wt%, and have a close-knit structure with little aeration. These therefore are not suitable for making receptacles according to the present invention.

A typical mix for a soft baked material comprises 20-55%, preferably 25-40% flour, 10-50%, preferably 25 to 40% sugar, 2-20%, preferably 5-10% fat, 0-10%, preferably 2-7% egg and / or milk solids and 5-30%, preferably 10-30% water. Fats / oils that may be used include coconut oil, palm oil, palm kernel oil, cocoa butter, milk fat, sunflower oil, safflower oil, olive oil, linseed oil, soybean oil, rapeseed oil, and mixtures, fractions or hydrogenates thereof. Sugars that may be used include simple sugars such as sucrose, fructose, lactose, and dextrose; corn / glucose syrups and invert sugar. In addition, the soft baked material may contain other ingredients conventionally found in such products, such as starch, salt, flavours, colours (e.g. caramel), cocoa powder, inulin, emulsifiers (e.g. lecithin), stabilisers, preservatives and inclusions such as pieces of nuts, fruit and chocolate. Water is an important component of the mix because it allows the starch to gelatinize during baking. Some, but not all of the water is driven off during baking, so that the water content of the soft baked material is from 5 to 20% preferably from 8 to 15%. Hence the amounts of the other ingredients in the baked products are proportionately higher.

Due to its formulation, structure and water content, the soft baked material is malleable / compressible / elastic. Thus brownies are suitable since they are normally baked for long enough that they are crisp on the outside but remain soft and moist in the centre. Similarly cakes / sponges are also baked to be soft and moist in the centre. The soft baked material is formulated so that it has good eating properties and is dry to the touch when frozen.

The pieces of the soft baked material are sized from 1 to 20 mm, preferably from 2 to 10 mm, and especially from 5 to 7 mm average diameter D (1,0). The pieces of soft baked material may be obtained from larger pieces of baked material, for example by crushing or breaking them.

The receptacle may be made solely from pieces of soft baked material, or it may be made from a mixture of pieces of soft baked material with up to about 50% of other particulates, such as seeds, nuts, cereals, fruit pieces, chocolate chips and the like. These are also sized from 1 to 20 mm, preferably from 2 to 10 mm, and especially from 5 to 7 mm average diameter D (1,0).

The receptacle is preferably a cone or a cup, but may be any shape suitable for use in a composite frozen product. For example it may have a polygonal cross-section, such as a triangle, square, rectangle or hexagon. We have found that receptacles produced according to the invention are very robust, even when they have corners (e.g. a receptacle with a square or rectangular cross-section).

### Brief Description of the Drawings

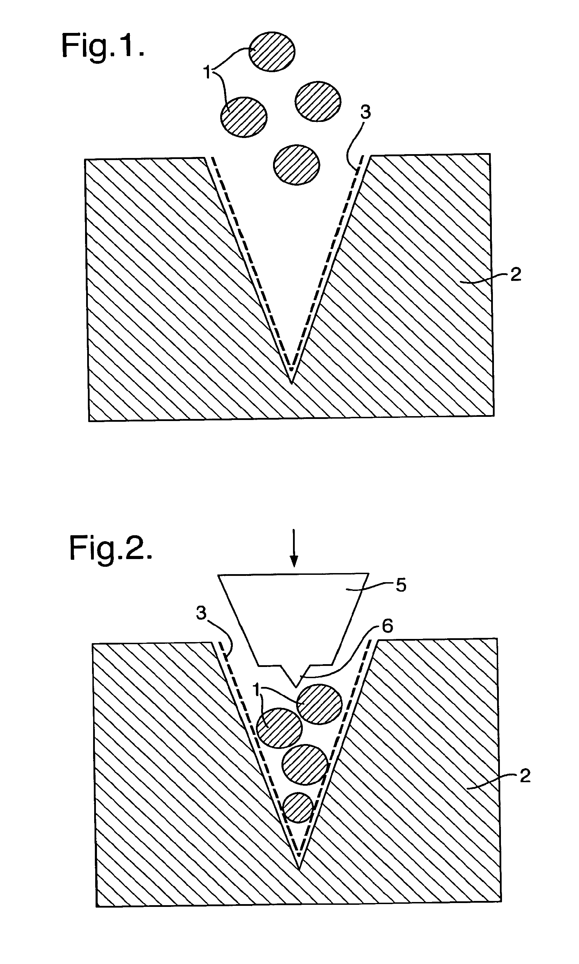

The invention will be further described with reference to Figures 1 to 4 which show a schematic illustration of the process of the invention by which the receptacle is produced from the pieces of soft baked material.

Firstly, as shown in Figure 1, the required amount of pieces of soft baked material 1 is placed into a support (female) mould 2. The support mould may contain packaging material 3 which preferably corresponds to the shape of the mould (such as a conventional cone sleeve when the receptacle is a cone). The packaging sleeve may be made from paper, paper/aluminium or a suitable plastic packaging material. By forming the receptacle inside the packaging, there is no need for a separate, subsequent step of placing the receptacle in the sleeve. The pieces of soft baked material may, for example, be dosed by means of a volumetric head or a screw conveyor. The size of the receptacle formed can be varied without changing the mould by simply changing the dosing weight of material. The quantity of soft baked material deposited is preferably from 5 to 30g, more preferably from 10 to 25g, most preferably from 15 to 20g.

The pieces of soft baked material must be sufficiently firm to be dosed conveniently: if the baked material is too soft / sticky, it can become compacted and it therefore becomes difficult to accurately dose the required amount into the mould (especially if the required amount is relatively small). This depends on the nature of the soft baked material. If the soft baked material is not sticky it can be dosed at room temperature, and this is preferred. However, if the baked material is inherently very soft / sticky, it can be frozen before dosing it. Thus the baked material is firm during dosing, but can subsequently be warmed up in the mould so that it becomes sufficiently soft and malleable for shaping. If the material is initially frozen, it may be warmed up (e.g. to around 20°C) after it has been dosed into the mould. Warming can be achieved for example by means of jets of hot air or preferably by injecting steam into the mould, for up to about 10 seconds, such as from 3 to 8 seconds. Using steam has the advantage of warming the material quickly, and also increasing its water content, thereby further softening the material.

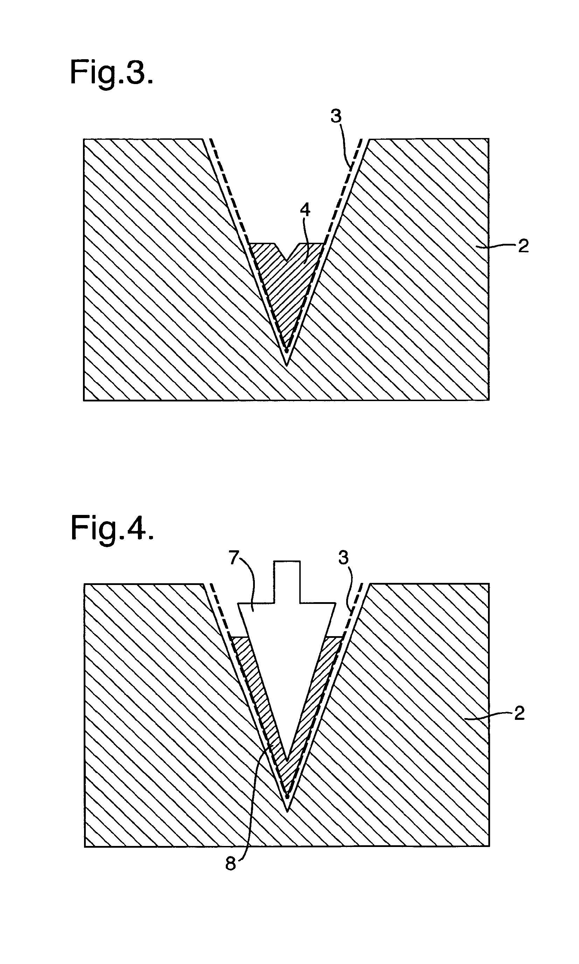

In the next step of the process, shown in Figure 2, pressure is applied to the pieces of soft baked material 1 in the mould in order to compact it into an agglomerate, for example by using a compacting tool 5. The compacting tool preferably corresponds to the shape of the support mould but with a truncated tip. So for example, when the support mould is conical, the compacting tool is frusto-concial. The resulting agglomerate takes up the external shape of the receptacle (corresponding to the internal shape of the mould). However the compacting tool may nonetheless have a small pointed protrusion 6 which makes a small depression in the agglomerate of soft baked material. We have found that this begins to shape the inside of the receptacle and thereby facilitates the next step in the process in which the receptacle is shaped. The tool is typically at room temperature and is typically applied for a short period of time, such as about 1 second. Figure 3 shows the resulting agglomerate 4.

Then, as shown in Figure 4, a shaping tool 7 (male mould) is inserted whilst the agglomerate is still in the support (female) mould. The material in the agglomerate is squashed and may also be displaced up the sides of the mould, depending on the nature of the material. The extent of displacement which can be achieved depends on the properties of the baked material (e.g. the elasticity), which in turn depends on its temperature, moisture content etc. The shaping tool thus forms the agglomerate into the receptacle with the desired size, thickness and internal shape. The amount of material dosed into the cone is chosen accordingly. For example, 20g of pieces of soft baked material can produce a standard size cone, such as 110mm in height, 45mm top diameter and having a wall thickness of about 2.5 to 4mm. The shaping tool is typically at ambient temperature when used, but may if desired be warmed. The shaping tool is typically held in place for a short period time of time, such as 0.5 - 10 seconds. Ultrasound may be applied during the shaping step. We have found that this can help to form the agglomerate into the receptacle by reducing the mechanical force which needs to be applied to cause the pieces of soft baked material to stick to each other. The ultrasound may be applied via the shaping tool, for example at a frequency of about 20kHz. Ultrasonic forming is known for forming pre-baked food into a desired shape, for example in WO 03 / 020051.

In order to help to release the shaping tool from the receptacle, the shaping tool may be hollow and have small holes located over its surface. Air can be blown into the shaping tool and out from the holes which helps it to de-mould. Alternatively or additionally, the shaping tool can be twisted as it is removed which also helps it to de-mould from the receptacle.

The pieces of soft baked material are fused together by the mechanical pressure (and / or ultrasound) applied during forming thereby producing a receptacle 8, for example a cone. Finally the receptacle is removed from the mould and may then be frozen. Preferably the receptacle is filled with a frozen confection shortly after the cone has been formed, such as within 30 seconds, preferably within 10 seconds. This cools the receptacle and freezes it. Alternatively, the receptacle can be frozen without being filled with a frozen confection, e.g. by blast freezing, and then stored and subsequently filled with a frozen confection. Although the receptacle is formed without a binder for sticking the pieces of baked material together and can therefore be quite fragile at ambient temperature, the pieces are held together by virtue of the fact that it is frozen. The receptacle therefore possesses the required firmness and stability during storage and consumption so that it maintains its shape. Therefore, no binder is required to hold the pieces together. Using a binder would increase the fat and / or sugar content of the receptacle. Moreover, using a sugar-based binder can also result in the receptacle becoming sticky to the touch after storage or temperature abuse. Therefore the receptacle preferably contains less than 10 wt% of binder, more preferably less than 5 wt%, even more preferably less than 2 wt%, most preferably it contains no binder.

The frozen confection used to fill the receptacle may comprise two or more different colours / flavours / types which are co-extruded and may contain sauces and / or inclusions (such as pieces of fruit, nut, chocolate, biscuit etc). After filling, the top of the product may be decorated, e.g. with a sauce and / or pieces of fruit, nut, chocolate etc. Finally the product may be packaged (e.g. if the product was formed in a cone sleeve, a lid may then placed on top and the sleeve sealed).

The edible receptacles have a number of advantages over conventional wafer cones, whilst retaining the necessary dryness to touch and robustness on storage and after temperature abuse. Firstly, they provide a new eating experience, for example a different texture, especially when pieces of e.g. fruit, nuts or other inclusions are incorporated in the receptacle. They also have an attractive, artisanal appearance in contrast to the plain, homogenous appearance of wafer cones. Secondly, they can be made with a simple process from pre-baked pieces, so that baking is not required in the ice cream factory. Moreover, they can be manufactured inside their packaging whereas conventional wafer cones must be placed within the packaging after they have been formed. Thirdly, since there is no need to glue the pieces of baked material together, there is no need for a binder. Binders typically contain significant amounts of fat and / or sugars, so the absence of a binder gives nutritional benefits (i.e. less fat / sugar) and also taste improvements (the receptacle is not excessively sweet and keeps the original flavour of its component pieces). Fourthly, they keep their original eating characteristics on storage. Conventional wafer cones are initially crispy but go soggy when in contact with frozen confections. However, since the texture of the receptacles according to the invention is already somewhat chewy, this problem does not arise. Thus, unlike conventional wafer cones, there is no need for an internal layer of a fat-based coating (such as chocolate or a couverture) in order to keep them crisp on storage. Although it is not necessary, because the receptacle is not perceived to change its texture on storage by the absorption of water, the receptacle may nonetheless be coated with a fat-based coating material, such as chocolate, at least on its inner surface, if desired.

The present invention will now be further described with reference to the following examples which are illustrative and not limiting.

### Example 1: Cone made from sponge cake pieces

Frozen pieces of plain sponge cake (3-6mm in size) were obtained from Pecan Deluxe (product code 508-023). The pieces were defrosted by placing them at room temperature overnight. 20g of sponge pieces were dosed into a standard Cornetto™ cone sleeve placed inside a conical mould. The pieces were tamped to form a single agglomerate using a frusto-conical tool (corresponding to the conical mould) with a small cone on its end which formed a depression in the agglomerate and thereby began to shape the inside of the receptacle. A conical shaping tool was pushed into the agglomerate for approximately 2 seconds and then demoulded from the cone by blowing air through small holes in its surface. The resulting cone was 110mm high, with an external top diameter of 45mm and a wall thickness of approximately 4mm. The cone was then immediately filled with ice cream.

### Example 2: Mini-cone made from brownie pieces and chocolate chips

Frozen pieces of brownie (approximately 6 x 6 x 9-15 mm in size) were obtained from Pecan Deluxe (Dark Brown Brownie Pieces, product code 508-006). The brownie pieces were defrosted by placing them at room temperature overnight. Chocolate chips (approximately 2-6mm in size) were obtained from Barry Callebaut. 5.6g of brownie pieces and 2.4g of chocolate chips were dosed into a standard Cornetto™ cone sleeve placed inside a conical mould. The pieces were tamped to form an agglomerate as in example 1. A conical shaping tool was pushed into the agglomerate for approximately 2 seconds and then demoulded from the cone by blowing air through small holes in its surface. The resulting cone was 60mm high, with an external top diameter of 27mm and a wall thickness of approximately 4mm. The cone was then immediately filled with ice cream.

The cones felt dry and not cold to touch, did not stick to the sleeve, and were found to keep their shape after temperature abuse, consisting of storage at -10°C for 5 days or cycling between -10 and -20°C every 24 hours for 14 days.

### Example 3: Cone made from sponge cake pieces using ultrasound

Frozen pieces of plain sponge cake (3-6mm in size) were obtained from Pecan Deluxe (product code 508-023). The pieces were defrosted by placing them at room temperature overnight. 20g of sponge pieces were dosed into a standard Cornetto™ cone sleeve placed inside a conical mould. The pieces were tamped to form a single agglomerate using a frusto-conical tool (corresponding to the conical mould). Next a small cylinder having a diameter of about 10 mm was inserted for about 0.3s into the agglomerate to form an initial hole about 60mm in depth. Ultrasound (20 kHz) was applied via the cylinder as it was pushed into the agglomerate. Then the cylinder was removed and a conical forming tool was pushed into the agglomerate for about 0.3s to form a cone, again whilst applying ultrasound (20 kHz). The heat and vibration generated by the ultrasound helped to demould the conical forming tool. The resulting cone was 110mm high, with an external top diameter of 45mm and a wall thickness of approximately 4mm. The cone was then immediately filled with ice cream.

The various features and embodiments of the present invention, referred to in individual sections above apply, as appropriate, to other sections, *mutatis mutandis.* Consequently features specified in one section may be combined with features specified in other sections, as appropriate.

## Claims

1. An edible receptacle suitable for containing a frozen confection, and comprising at least 50 wt% of pieces of soft baked material having a size of from 1 to 20 mm.

2. An edible receptacle according to claim 1 which contains less than 10 wt% of binder.

3. An edible receptacle according to claim 1 or claim 2 which contains no binder.

4. An edible receptacle according to any of claims 1 to 3 wherein the pieces of soft baked material are from 2 to 10 mm in size.

5. An edible receptacle according to any of claims 1 to 4 wherein the receptacle comprises up to 50 wt% of other particulate edible material of from 1 to 20 mm in size.

6. An edible receptacle according to claim 5 wherein the other particulate edible material is selected from seeds, nuts, cereals, fruit pieces, chocolate chips and mixtures thereof.

7. An edible receptacle according to any of claims 1 to 6 which is a cone.

8. An edible receptacle according to any of claims 1 to 6 which has a polygonal cross-section.

9. An edible receptacle according to any of claims 1 to 8 which has a wall thickness of from 2 to 5mm.

10. An edible receptacle according to any of claims 1 to 9 which has a mass of from 5 to 30g.

11. A process for preparing an edible receptacle according to any of claims 1 to 10, the process comprising:
(a) dosing the required amount of pieces of soft baked material having a size of from 1 to 20 mm into a support mould,
(b) compacting the pieces to form an agglomerate, and
(c) inserting a shaping tool into the agglomerate in the support mould to form the agglomerate into a receptacle of the desired shape.

12. A process according to claim 11 wherein the receptacle is frozen after step (c).

13. A process according to claim 11 or claim 12 wherein the support mould contains packaging material into which the pieces of soft baked material are dosed.

14. A process according to any of claims 11 to 13 wherein ultrasound is applied to the agglomerate in step (c).

15. A composite frozen confection product which comprises an edible receptacle according to any one of claims 1 to 10 and a frozen confection.

16. A process for manufacturing a composite frozen confection according to claim 15, the process comprising dispensing a frozen confection into an edible receptacle according to any of claims 1 to 10.
